# EUROPEAN PATENT APPLICATION

(11) **EP 1 460 817 A1**
(43) Date of publication of application: **22.09.2004**
(21) Application number: 03290701.6
(22) Date of filing: 19.03.2003
(51) Int. Cl.: H04L 29/06, H04M 3/56, H04M 7/00

(54) **Method and system for the concurrent use of a multiple terminals during an audio and/or video telecommunication**

(71) Applicant: ALCATEL, 75008 Paris (FR)
(72) Inventor: Mourot, Patrick, 67400 Illkirch (FR)
(74) Representative: Rausch, Gabriele, Dr.

(57) **Abstract**

The present invention concerns a method for operating an audio and/or video telecommunication between two users (1) and (2), at least partly connected to a packet switched network (3), where in at least one of the users is provided with at least two bidirectional audio capable telecommunication terminals e.g. (1) and (1') including sound delivering and/or sound capturing devices, characterised in that it mainly consists of splitting the telecommunication link in a communication server (4) into two independent audio channels, each of them corresponding to one of the two directions of transmission, and allocating, on each end of the telecommunication link, each of the audio channels to one of the adapted devices of the corresponding terminal(s)(1,1';2,2').

## Description

The present invention is generally related to telecommunication methods and systems, in particular in connection with audio and/or video telecommunications, and concerns a method and a system for operating an audio and/or telecommunication between two users with improved audio quality.

In business environment users have got several devices at their fingertips. Some of them are at least audio capable like phone devices or PC desktops. The audio quality depends of course on media transport (circuit switch / Voice over IP) and on coding/decoding equipment. Nevertheless, the audio quality does also rely on the performances of the speakers, headsets and microphones capabilities but also on speakers, headsets and microphones capabilities used by those devices.

In particular, apparatuses which are not dedicated to audio purposes often have poor quality audio equipment in order to reduce price. This is, in particular, the case with multimedia computers (low cost microphones, coding/ decoding availability...).

Today when a communication begins on a set it can be transferred to another but it is very unlikely to find a means to use the ad-hoc hardware to render a better audio quality. For example, especially impaired people would like either to use the PC speaker to better hear the distant caller or the phone microphone to be better understood by the peer.

Communication protocols are known, such as SIP (Session Invitation Protocol / IETF - RFC 3261), which allow to setup media flows for a communication, but does not cover all legacy interworking. On the other hand, the legacy environment does usually not fully deal with IP transmission and corrections.

Nowadays, the known methods do not allow a user to choose the best combination for audio communication depending on:
- his personal capability or
- device, switch, gateway and network facilities or
- his way of working

Thus, today all media streams normally go through the same end points. It is an aim of the present invention to overcome the aforementioned limitations and drawbacks.

To that end, the present invention concerns a method for operating an audio and/or video telecommunication between two users at least partly connected to a packet switched network, wherein at least one of the users (i.e. one or both of said users) is provided with at least two bidirectional audio capable telecommunication terminals including sound delivering and/or sound capturing devices.

In order to achieve the aforementioned goal, the inventive method is characterised in that it mainly consists of splitting the telecommunication link into two independent audio channels, each of them corresponding to one of the two directions of transmission (emission/reception), and allocating, on each end of the telecommunication link, each of the audio channels to one of the adapted devices of the corresponding terminal(s).

When set telecommnucation also carries data, the latter is treated and handled in a known manner, and directed to an adpated delivering device.

According to a first embodiment of the invention, the allocations of the audio channels towards the available sound delivering and capturing devices is set when the telecommunication link is established.

According to a second embodiment of the invention, or in addition to the first embodiment described before, at least one of the allocations of the audio channels towards the available sound delivering and capturing devices is changed at least once during the duration of the telecommunication link between the two users.

Thus, the basic idea of the invention is to:
- split an audio communication as two independent audio channels.
- use an associated device to play /capture the appropriate media stream in an independent way for outgoing or incoming streams.
- define a logical communication between the two telecommunication terminals (for example legacy phone & associated device).

In particular in relation to low quality audio equipment found in certain audio enable terminals (such as multimedia PC), the inventive solution is to convey each media stream (sent and received) in a separate way. This gives the user the possibility to choose the device to be used for each media direction and to switch from one configuration to another during a communication:
- both streams on one device or terminal
- receiving media streams on one set or terminal and sent media streams on the other.

Advantageously, the allocations of the various devices of the two concerned communication terminals are managed by a processor driven terminal or server which is able to describe upstream and downstream audio flows independently one from the other.

Preferably, the management of the allocations and of the control of the audio streams on the two independent channels are performed by the terminal or server based on Session Initiation Protocol (SIP) features, on SDP protocol and on switch abilities of the communication terminals.

One of the communication terminal can be a SIP enable phone, such as a multimedia PC, and the other communication terminal can be a wireless or corded phone, such as a legacy phone.

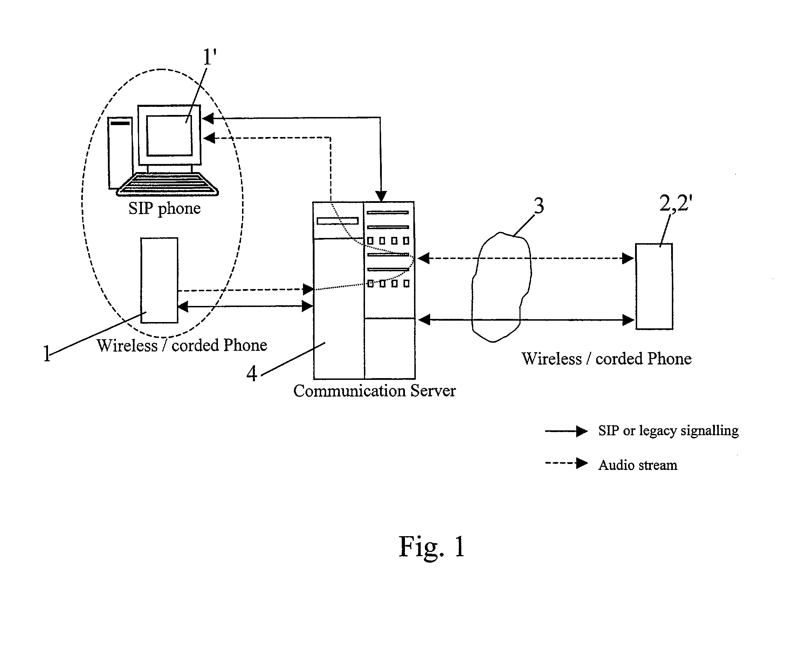

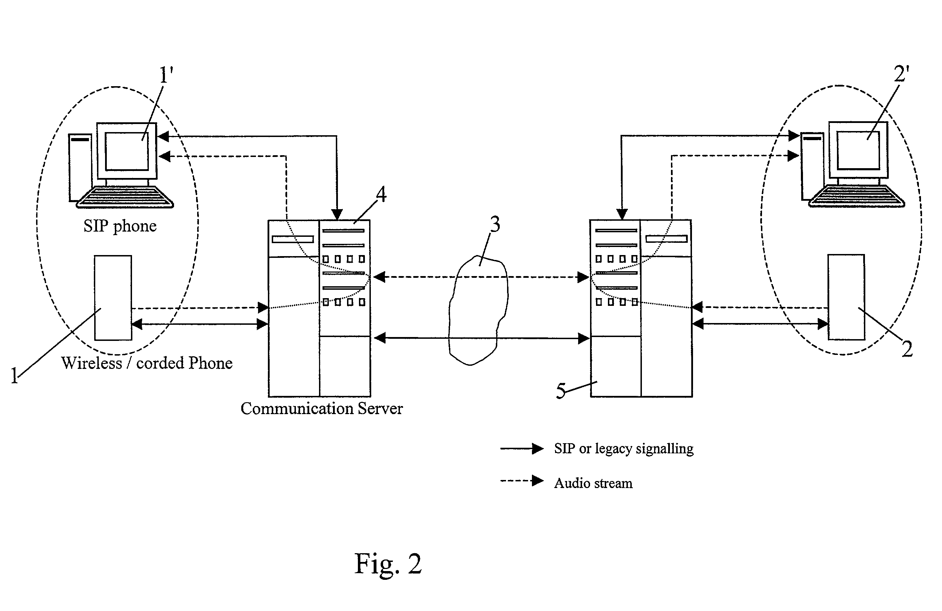

The invention will be better understood thanks to the following description and drawings of two embodiments of said invention given as a non limitative example thereof, the figures 1 and 2 of said drawings, showing a telecommunication between two users implementing the inventive method and system.

As shown by way of examples on the enclosed figures, the allocations of the various devices of the two concerned communication terminals 1, 1'; 2, 2' are managed by a processor driven terminal or server 4; 5 being which is able to describe upstream and downstream audio flows independently one from the other.

Preferably, the concerned terminal or server is based on SIP features and on switch abilities of the communication terminals 1, 1'; 2, 2', such as "mute" for example.

The inventive method can be applied to a telecommunication wherein only one user end is equipped with two telecommunication terminals 1 and 1', the other user end comprising only one communication terminal 2, 2' (fig. 1).

Nevertheless, according to a preferred embodiment of the invention illustrated on figure 2, the method is applied to a system wherein both user ends are equipped with two communication terminals 1 and 1'; 2 and 2', each pair of communication terminals 1 and 1'; 2 and 2' being linked to a corresponding microprocessor driven terminal or server 4, 5, such as a communication server, said terminals or servers 4 and 5 building up the telecommunications link between them via the packed switched network 3.

The inventive method will allow to symmetric behavior concerning communication evolution. Thus legacy phone can:
- set-up, receive or tear down a normal communication
- ask the system to use his SIP phone for listening or for speaking or both
- come back to the initial situation (use only the phone)
- switch to the legacy phone (transfer).

In the same way, the associated SIP phone can:
- setup, receive or tear down a normal communication.
- ask the system to use his legacy phone for listening or for speaking or both
- come back to the initial situation (use only the SIP phone)
- switch to the legacy phone (transfer).

Depending on the type of terminals belonging to the user, the setting in connection with the inventive method can be performed by configuring the system through service codes, through programmable keys and/or through item selection in a menu displayed on a corresponding screen (sophisticated terminal).

In case of a non intelligent or poor terminal, the user can fo example enter the service code and then be given the opportunity (by vocal messages) to redirect the upstream and/or downstream media flow towards the associated terminal (said latter will have been declared by way of preliminary configuration).

Thus, the upstream flow could be directed towards the loudspeakers of a PC and the downstream flow could be generated by the handset of the legacy phone.

Alternatively, the upstream flow could be directed towards an amplified listening device of the phone and the downstream flow could be generated by the microphone of an associated multimedia PC.

When using a PC as a SIP phone, media control will be available thanks to underlying OS (Operating System).

According to an other feature of the invention, the audio streams of at least one of the two channels can be subjected to data processing, in particular to a processing method of the group comprising text to Speech, Speech to Text and computerised language translation.

The present invention also concerns a telecommunication system for performing the method described before, wherein at least one user end is equipped with a communication server 4, 5 able to split the telecommunication link into two audio channels, said server being connected to two telecommunication terminals 1, 2; 1', 2' including each a sound delivering device and a sound capturing device, said upstream and downstream channels being allocated each to one of the adapted devices according to the concerned user's choice.

According to the invention, the server 4; 5 or each of the servers 4 and 5 comprises SIP based means and features for treating and allocating independently upstream and downstream audio flows and for controlling the sound delivering and capturing devices of the two connected communication terminals 1,2; 1', 2' in accordance with the setting or programming of the concerned user.

The system will call or release the communication with the associated devices.

The gateway (i.e. server) will separate the audio flows according to system programming. It will allow at least to have:
- upstream from one of the user terminals to the peer;
- downstream from the distant to one of the user terminals;
- both streams from/to one user terminal to/from the peer.

The user(s) will be offered the same kind of features on his/their phone set.

The SIP gateway will offer means to program these audio flows accordingly.

As shown on the figures, logical communication is established between these communication terminals. The legacy part knows the associated device and vice & versa.

Furthermore, the communication can begin whatever the phone and can stop whatever the phone.

The invention allows to benefit from SIP facilities such as re-INVITE, REFER and SPD mechanisms (IETF / RFC 2327), as well as of course from the best audio equipment available.

The invention will now be described in relation to a practical non limitative example.

Thus, a user who receives or launches a call on his legacy phone or on his SIP phone (multimedia PC) will be connected to the caller or callee thanks to a communication server. The user will be proposed by the server the possibility to redirect at least one of the audio flows towards an associated terminal, through service codes, programmable keys or menus (texts or vocal messages).

Depending on the choice of the user, the server will establish an other communication towards the associated multimedia PC, while describing the nature of the session. A SDP description will be prepared and included in the SIP message inviting to a communication.

In this example, this session can consist in an audio communication in reception (receive only) with a given codec (wideband, G 729,...). This means that the upstream media flow will be sent to the SIP terminal and that the server will not use the downstream flow of this terminal. The server will also programm the legacy phone in order to realise a one way dowstream commutation (terminal <-> server) towards distant.

The server memorises the list of the associated terminals, controls the allocations of the audio flows (which terminal and which codec), performs the transcoding operations when needed (G 711 ↔ G 729) and provides the user with controls to finish a session or to ensure the evolution of a communication.

Finishing a communication on a terminal involves the release of the circuit and /or paket ressources used by the server and the release of the distant.

Make a communication evoluate means changing device for listening, for speaking, for recovering the two media flows, or even changing terminals.

A change in the media flow can consist in a reinvitation of the existing dialog on the multimedia terminal (SIP). This also means a change of the SDP description (for example: an audio session in emission - send only- with a change of codec). The server listens to what is coming from the multimedia terminal but does not send any audio flow to said latter. The server must change the communication towards the legacy phone: he will commute the emission timeslot of the distant terminal towards the timeslot of the local terminal. The server will also inject the media flow coming from the multimedia terminal in the listening timeslot of the distant terminal, possibly after transcoding.

The user will also be able to bring back both flows on one terminal. The server will normally commute the timeslots and put on hold or stand-by the other terminal, and commute back later on or release the communication.

The user can also change the multimedia terminal by means of a SIP transfert using SIP facilities such as REFER.

The inventive method can be peformed automatically at the beginning of the communication through preset configuration: the arriving and departing media flows are allocated to predetermind terminal.

In the present invention, the packet switched network can be either a local network, a wide area network, at least a part of the world wide web or the association of at least two of these networks.

The present invention is, of course, not limited to the preferred embodiment described and represented herein, changes can be made or equivalents used without departing from the scope of the invention.

## Claims

1. Method for operating an audio and/or video telecommunication between two users, at least partly connected to a packet switched network, wherein at least one of the users is provided with at least two bidirectional audio capable telecommunication terminals including sound delivering and/or sound capturing devices, **characterised in that** it mainly consists of splitting the telecommunication link into two independent audio channels, each of them corresponding to one of the two directions of transmission, and allocating, on each end of the telecommunication link, each of the audio channels to one of the adapted devices of the corresponding terminal(s) (1, 1'; 2, 2').

2. Method according to claim 1, **characterised in that** the allocations of the audio channels towards the available sound delivering and capturing devices are set when the telecommunication link is established.

3. Method according to claim 1 or 2, **characterised in that** at least one of the allocations of the audio channels towards the available sound delivering and capturing devices is changed at least once during the duration of the telecommunication link between the two users.

4. Method according to anyone of the aforementioned claims, **characterised in that** the allocations of the various devices of the two concerned communication terminals (1, 1'; 2, 2') are managed by a processor driven terminal or server (4; 5) being able to describe upstream and downstream audio flows independently one from the other.

5. Method according to claim 4, **characterised in that** the management of the allocations and of the control of the audio streams on the two independent channels are performed by the terminal or server (4; 5) based on Session Initiation Protocol (SIP) features such as INVITE, re-INVITE and REFER, on SDP protocol and on switch abilities of the communication terminals (1, 1'; 2, 2')

6. Method according to claims 1 to 5, **characterised in that** both users' ends are equipped with two communication terminals (1 and 1'; 2 and 2'), each pair of communication terminals (1 and 1'; 2 and 2') being linked to a corresponding microprocessor driven terminal or server (4, 5), such as a communication server, said terminals or servers (4 and 5) building up the telecommunications link between them via the packed switched network (3).

7. Method according to either claim 4, 5 or 6, **characterised in that** one (1, 2) of the two communication terminals is a wireless or corded phone and the other (1', 2') of said communication terminals is a SIP phone, for example a multimedia PC.

8. Method according to anyone of claim 1 to 7, **characterised in that** the audio streams of at least one of the two channels are subjected to data processing, in particular to at least one processing method of the group comprising Text to Speech, Speech to Text and computerised language translation.

9. Telecommunication system for performing the method according to anyone of claims 1 to 8, wherein at least one user end is equipped with a communication server (4, 5) able to split the telecommunication link into two audio channels, said server being connected to two telecommunication terminals (1, 2; 1', 2') including each a sound delivering device and a sound capturing device, said upstream and downstream channels being allocated each to one of the adapted devices according to the concerned user's choice.

10. Telecommunication system according to claim 9, **characterised in that** the server (4; 5) or each of the servers (4 and 5) comprises SIP based means and features for treating and allocating independently upstream and downstream audio flows and for controlling the sound delivering and capturing devices of the two connected communication terminals (1,2; 1',2') in accordance with the setting or programming by the concerned user.

11. Telecommunication system according to claim 9 or 10, **characterised in that** one (1', 2') of the communication terminal is a SIP enable phone, such as a multimedia PC, and that the other communication terminal (1, 2) is a wireless or corded phone, such as a legacy phone.
